# EUROPÄISCHE PATENTSCHRIFT

(11) **EP 1 664 841 B1**
(45) Veröffentlichungstag und Bekanntmachung des Hinweises auf die Patenterteilung: **03.10.2012**
(21) Anmeldenummer: 04764008.1
(22) Anmeldetag: 12.08.2004
(51) Int. Cl.: G01S 17/08

(54) **VERFAHREN UND VORRICHTUNG ZUR INTERAKTION ZWISCHEN EINEM DISTANZVERMESSER UND EINER VERMESSUNGSAPPLIKATION**
METHOD AND DEVICE FOR ENSURING INTERACTION BETWEEN A DISTANCE METER AND A SURVEYING APPLICATION
PROCEDE ET DISPOSITIF POUR ASSURER UNE INTERACTION ENTRE UN APPAREIL DE MESURE DE DISTANCE ET UNE APPLICATION DE MESURE

(30) Priorität: 12.09.2003 CH 155703
(43) Veröffentlichungstag der Anmeldung: 07.06.2006
(73) Patentinhaber: Leica Geosystems AG, 9435 Heerbrugg (CH)
(72) Erfinder: GIGER, Kurt, CH-9464 Rüthi (CH); ERNE, Kurt, A-6710 Nenzing (AT)
(74) Vertreter: Kaminski Harmann
(86) Internationale Anmeldenummer: PCT/EP2004/009004
(87) Internationale Veröffentlichungsnummer: WO 2005/029122

(56) Entgegenhaltungen:
- EP-A- 0 828 165
- WO-A-90/12330
- DE-A- 10 055 510
- DE-A- 10 310 188
- DE-A- 19 836 812
- US-A- 5 337 149
- US-A- 5 467 290
- US-A- 5 502 898
- US-A- 5 909 545

## Beschreibung

Die Erfindung betrifft ein Verfahren, eine Vorrichtung und ein Computerprogrammprodukt zur Interaktion zwischen einem Distanzvermesser und einer auf einer Rechnereinheit ausgeführten Vermessungsapplikation mittels eines Fernsteuerelernents, das zur Interaktion zwischen dem Benutzer und der Vermessungsapplikation in drahtloser Kommunikationsverbindung mit der Rechnereinheit steht.

Vorrichtungen zur Distanzmessung sind aus dem Stand der Technik in unterschiedlichsten Ausbildungsformen hinlänglich bekannt. Von besonderer Bedeutung sind hierbei Distanzmessgeräte mit optischer Distanzmessung mittels eines Laserstrahls, die eine berührungslose und hochgenaue Messung zur einem im Nah- oder Fernbereich befindlichen Objekt ermöglichen. Derartige Distanzmessgeräte kommen nicht nur in der Geodäsie, sondern inzwischen vor allem in Form von kleinen und kostengünstigen Hand-Distanzmessgeräten im Baugewerbe bei Bauvermessungen zum Einsatz und werden beispielsweise zur dreidimensionalen Vermessung von Räumen eingesetzt. Beispielsweise aus DE 43 16 348 A1 und WO 02/16964 sind Vorrichtungen dieser Art bekannt.

Aus dem Stand der Technik bekannte Hand-Distanzmessgeräte weisen insbesondere neben einer optischen Anzeige zur Darstellung des gemessenen Distanzmesswerts einen Datenspeicher auf, der die Speicherung einer Vielzahl an Messwerten, denen gegebenenfalls jeweils ein Text zur Bezeichnung zugeordnet werden kann, ermöglicht. Über eine im Hand-Distanzmessgerät integrierte Datenschnittstelle, beispielsweise eine RS232-Schnittstelle, erfolgt nach Abschluss der Messungen die elektronische Übertragung der gespeicherten Distanzmesswerte an eine nicht zwangsläufig am Messort befindliche Rechnereinheit, die z.B. als ein Personalcomputer oder ein sogenannter Pocket-PC ausgebildet ist. Die übertragenen Daten können mittels einer auf der Rechnereinheit ausgeführten Vermessungsapplikation verarbeitet werden, indem die Distanzmesswerte graphischen Konstruktionsobjekten zugeordnet werden, die dem Benutzer beispielsweise in Form von ausrichtbaren graphischen Konstruktionslinien von der Vermessungsapplikation zur Verfügung gestellt werden. Somit ist es möglich, ein Objekt, insbesondere ein Bauwerk, das vermessen wurde, in Form einer genauen elektronischen Zeichnung zu beschreiben. Unterschiedlichste Vermessungsapplikationen, die insbesondere im Bereich der Architektur zum Einsatz kommen und dem Funktionsumfang moderner CAD-Programme gleichkommen, sind hinlänglich bekannt. Bei der beschriebenen Methode ergeben sich jedoch insbesondere bei der Zuordnung mehrerer gespeicherter und übertragener Messwerte erheblich Probleme, da der Benutzer zu dem eventuell erst wesentlich späteren Zeitpunkt des Übertragens der Messwerte in die Vermessungsapplikation bereits oft nicht mehr weiss, welcher Messwert welchem Messvorgang zuzuordnen ist. Durch ein Hinzufügen eines Bezeichnungstextes zu jedem gemessenen Distanzmesswert, ein detailliertes manuelles Dokumentieren des Messvorganges oder jeweils ein unmittelbar nach der Aufnahme weniger Messwerte erfolgendes Übertragen in die Vermessungsapplikation kann dieses Problem vermieden werden, jedoch ist mit diesen Lösungsansätzen ein zusätzlicher Zeitaufwand bei der Durchführung der Messvorgänge verbunden.

Bei einem anderen üblichen Verfahren wird auf eine notwendige Speicherung der Distanzmesswerte seitens des Hand-Distanzmessgeräts verzichtet, indem nach jedem Messvorgang der gemessene Distanzmesswert in die von einer am Messort platzierten Rechnereinheit ausgeführten Vermessungsapplikation übertragen wird. Dieses Übertragen findet entweder manuell statt, indem dem Benutzer den auf den Anzeigemitteln des Hand-Distanzmessgeräts erscheinenden Distanzmesswert über die Tastatur der Rechnereinheit eingibt, oder mittels elektronischer Datenübertragung per Datenschnittstelle. Nach dem Übertragen des Distanzmesswerts ordnet der Benutzer den übertragenen Distanzmesswert mittels der Vermessungsapplikation zu, indem er beispielsweise den Ausgangspunkt und die Ausrichtung einer zu zeichnenden Konstruktionslinie durch Bedienung der Tastatur der Rechnereinheit festlegt. Somit muss die Rechnereinheit direkt am Messort befindlich sein und nach jedem Messvorgang vom Benutzer bedient werden. Dies erweist sich vor allem aus ergonomischer Sicht als erheblicher Nachteil, da neben der Bedienung des Hand-Distanzmessgeräts die Bedienung der Rechnereinheit - jeweils abwechselnd - erfolgen muss.

Aus der US 5,337,149 A sind eine Vorrichtung und ein Verfahren bekannt, mittels welchen ein Computermodell eines grossen dreidimensionalen Objekts in Datenform erzeugt werden kann. Die Vorrichtung umfasst eine Distanzmesseinheit, einen Computer mit einem auf diesem vorinstallierten computergestützten CAD-Programm, eine Datenübermittlungseinheit und einen Bildschirm. Zunächst wird am Computer mittels des CAD-Programms eine zu messende Art einer Grösse festgelegt. In einem nächsten Schritt wird mittels der Distanzmesseinheit ein Distanzmesswert gemeinsam mit der Ausrichtung der Distanzmesseinheit aufgenommen, indem der Distanzvermesser mit Hilfe einer Fernbedienung die Messung auslöst. Dieser gemessene Distanzmesswert wird gemeinsam mit dem Wert der Ausrichtung an den Computer und somit an das CAD-Programm übertragen und dort der zuvor festgelegten Art der Grösse zugeordnet. Durch eine Vielzahl an Messungen und Zuordnungen der gemessenen Werte zu den jeweiligen Arten von Grössen ist es beispielsweise möglich, ein Computermodell eines Gebäudes zu erstellen. Das Zuordnen der Messwerte ist jedoch aufwendig, da ein direktes Bedienen sowohl des Computers, als auch der örtlich von der Distanzmesseinheit und dem Computer getrennten Fernbedienung erforderlich ist. Das System erfordert zudem eine Vielzahl an Komponenten und einen Computer, auf welchem das CAD-Programm vorinstalliert ist.

In der EP 0 828 165 A2 wird eine Vorrichtung zur Bestimmung und Weiterverarbeitung von Aufmassen auf der Basis einer Messung mit Hilfe eines optischen Messstrahls beschrieben.
Die Vorrichtung umfasst ein elektronisches Abstandsmessgerät und einen Rechner zum Steuern der Messung, sowie zum Erfassen und Weiterverarbeiten der Messwerte. Die Vorrichtung weist ausserdem einen Speicher zum Speichern einer Vielzahl geometrischer Grundformen und ein Anzeigemittel zur Anzeige und Auswahl der zu messenden geometrischen Grundform aus der Vielzahl vorgegebener geometrischer Grundformen auf. Unter geometrischen Grundformen werden Dreiecke, Quader, Vielecke, Trapeze, Rundsäulen, Halbrundsäulen, Kreise, Kreisabschnitte, Ellipsensäulen etc. verstanden.

Aus diesen ein-, zwei- oder dreidimensionalen Grundformen lassen sich Räume mit Türen, Fenstern etc. und Gebäude zusammensetzen. Eindimensionale Grössen sind beispielsweise Längen und Umfange. Die Vorrichtung gibt die Reihenfolge der Messungen entsprechend der ausgewählten geometrischen Grundform vor. Der Benutzer teilt dem Resultat der Messung der einzelnen Grundform ein Vorzeichen, also + oder -, zu. Aus den Resultaten der geometrischen Grundformen, die in der Vorrichtung gespeichert sind, können die ausgewählten geometrischen Grundformen vom Rechner zu einer Raumform verknüpft werden, um ein entsprechendes Aufmass der Raumform zu ermitteln. Im Abstandsmessgerät der Vorrichtung ist eine Schnittstelle definiert, die als Geräte-Datenstecker ausgelegt sein kann, an der Signale zur Übermittlung an den Rechner anliegen, die den gemessenen Wert, dessen Vorzeichen und einen Löschcode angeben. Die Messwerte werden auf die Betätigung des Datenabgabe-Betätigungsschalters hin über den Geräte-Datenstecker unmittelbar einem Rechner übergeben, das mit Hilfe eines vorinstallierten Programms, nach vorheriger Festlegung der Reihenfolge der Messwerte, diese passend miteinander verknüpft und die erforderlichen Berechnungen anstellt. Zur Durchführung einer Messreihe ist ein direktes Bedienen sowohl des Rechners zum Festlegen der Messreihenfolge, als auch der Distanzmesseinheit zur Durchführung der Messung und zum Übertragen der Messwerte an den Rechner erforderlich. Ausserdem wird ein Rechner benötigt, auf welchem ein entsprechendes Programm zum Festlegen der Messreihenfolge und zur Weiterverarbeitung der Messwerte installiert ist.

Der Erfindung liegt die Aufgabe zugrunde, die Interaktion zwischen einem Distanzvermesser und einer Vermessungsapplikation insbesondere in ergonomischer und wirtschaftlicher Hinsicht durch Schaffung eines neuen Verfahrens zu verbessern und eine Vorrichtung zur Ermöglichung einer solchen ergonomisch und wirtschaftlich verbesserten Interaktion zu schaffen.

Diese Aufgabe wird durch die Verwirklichung der Merkmale der unabhängigen Ansprüche gelöst. Merkmale, die die Erfindung in alternativer oder vorteilhafter Weise weiterbilden, sind den abhängigen Patentansprüchen zu entnehmen.

Im Folgenden werden zunächst das erfindungsgemässe Verfahren und das dabei zum Einsatz kommende System allgemein in Form einer Beschreibung der abstrakten Systemelemente dargestellt. Die erfindungsgemässe Vorrichtung wird im Anschluss beschrieben.

Bei dem erfindungsgemässen Verfahren kommt ein System mit einer Rechnereinheit, einem Distanzmesselement und einem Fernsteuerelement zum Einsatz. Die Rechnereinheit dient zur Ausführung einer Vermessungsapplikation, insbesondere eines graphischen Konstruktionscomputerprogramms, mit dem beispielsweise Bauwerke in Form einer elektronischen Zeichnung, die sich unterschiedlicher Konstruktionsobjekte wie z.B. Konstruktionslinien bedient, dokumentiert werden können. Die Rechnereinheit wird von einem Personalcomputer, beispielsweise einem Notebook oder einem Laptop, oder einem Kleincomputer, beispielsweise einem Pocket-PC, gebildet. Das Distanzmesselement dient zum Messen einer Distanz zu einem Objekt und zum Aufnehmen eines von der Vermessungsapplikation verarbeitbaren Distanzmesswerts und ist beispielsweise als optisches oder akustisches Distanzmessteil, insbesondere als Laserdistanzmessteil ausbildbar. Das Fernsteuerelement steht zur Interaktion zwischen dem Distanzvermesser und der Vermessungsapplikation in einer drahtlosen Kommunikationsverbindung mit der Rechnereinheit.

Unter dem Distanzmesselement und dem Fernsteuerelement sind funktional beschriebene Elemente zu verstehen, die entweder einteilig in Form einer einzigen gemeinsamen Einheit ausgebildet sind, wobei strukturell betrachtet das Distanzmesselement und das Fernsteuerelement - beispielsweise in Form eines um eine Fernsteuerfunktion erweiterten Distanzmessgeräts - nicht klar trennbar sind und sich Funktionselemente wie Anzeige- und Eingabemittel teilen, oder separiert als eine Distanzmess-Einheit mit einem Distanzmesselement und eine Fernsteuer-Einheit mit einem Fernsteuerelement angeordnet sind.

Mittels des Distanzmesselements wird eine Distanz zu einer Objekt gemessen und der entsprechende Distanzmesswert aufgenommen, wobei unter dem Messen der eigentliche Messvorgang und unter dem Aufnehmen das Erfassen des Messresultats, also des Messwerts zu verstehen ist. Der Distanzmesswert wird durch Interaktion zwischen dem Distanzvermesser und der Vermessungsapplikation über das Fernsteuerelement einer von der Vermessungsapplikation verarbeitbaren Grösse zugeordnet.

Das Zuordnen erfolgt vorzugsweise, indem der Distanzvermesser einen Steuerbefehl in das Fernsteuerelement eingibt und somit beispielsweise festlegt, wo und in welcher Richtung gemessen wurde, wodurch der Distanzmesswert z.B. in Form einer graphischen Konstruktionslinie durch die Vermessungsapplikation dargestellt und dokumentiert wird. Das übertragen des Distanzmesswerts, das vorzugsweise ebenfalls drahtlos über die Kommunikationsverbindung erfolgt, kann hierbei entweder nach dem Zuordnen erfolgen, wobei der Distanzvermesser zuerst z.B. festlegt, von welchem Standpunkt er in welche Richtung messen wird, oder bereits vor dem Zuordnen. Im letzteren Fall wird der Distanzmesswert nach dem Übertragen von der Vermessungsapplikation zwischengespeichert und im Anschluss durch den Distanzvermesser zugeordnet. Das Zuordnen des Distanzmesswerts zu einer von der Vermessungsapplikation verarbeitbaren Grösse erfolgt insbesondere, indem der Distanzvermesser eine von der Vermessungsapplikation angebotenen Grösse - beispielsweise eine Ausrichtung, einen Ausgangspunkt, einen Messtyp, eine Messkategorie und/oder eine Messbezeichnung - auswählt, die möglicherweise zuvor von einem anderen Benutzer definiert wurde. So ist es möglich, dass zuerst durch den Distanzvermesser über das Fernsteuerelement oder direkt über die Rechnereinheit mehrere Messaufgaben, beispielsweise durch Benennung mehrere Räume und der dort aufzunehmenden Messwerte, definiert werden. Im Anschluss ordnet der Distanzvermesser nach jeweils einem aufgenommenen Messwert über das Fernsteuerelement nämlichen Messwert der zuvor definierten Messaufgabe - insbesondere unter Zuhilfenahme eines optischen Anzeigemittels, beispielsweise einen LCD Bildschirm, des Fernsteuerelements durch Menüauswahl - zu. Die optischen Anzeigemittel geben insbesondere Auskunft über einen aktuellen Status der Vermessungsapplikation. Dieser aktuelle Status ist möglicherweise ein Zustand des Programmablaufs, beispielsweise das Warten auf Durchführung der Distanzmessung, der aktuelle Status des Zuordnens des Distanzmesswerts, beispielsweise das Auswählen eines graphischen Konstruktionsobjekts, die Ausrichtung des Konstruktionsobjekts, die Position des Konstruktionsobjekts und das erfolgreiche Platzieren des Konstruktionsobjekts auf der elektronischen Zeichnung der Vermessungsapplikation.

Die optischen Anzeigemittel sind beispielsweise als Segmentanzeige, als LCD Bildschirm oder als berührungssensitiver Bildschirm, der auch als Eingabemittel zur Eingabe von Steuerbefehlen verwendet wird, ausbildbar. Bei Verwendung eines Bildschirms ist die Darstellung zumindest eines Teils eines von der Vermessungsapplikation erzeugten Bildes, insbesondere eines von der Rechnereinheit angezeigten Monitorbildes, möglich, aus welchem der Distanzvermesser den aktuellen Status der Vermessungsapplikation ableiten kann.

Alternativ erhält der Distanzvermesser nach jedem Messvorgang eine Anweisung, die eine in Folge durchzuführende Messung betrifft. Dies erfolgt, indem die Vermessungsapplikation die Anweisung an das Fernsteuerelement sendet und der Distanzvermesser nach Anzeige durch die optischen Anzeigemittel der Anweisung, die den Messort und das Messobjekt betreffen kann, Folge leistet. Durch die drahtlose Kommunikationsverbindung ist es abhängig von der Art der Verbindung möglich, die Rechnereinheit und das Fernsteuerelement weit voneinander entfernt anzuordnen, so dass die von der Vermessungsapplikation gesendeten Anweisungen an den Distanzvermesser von einer zweiten Person, die die Rechnereinheit bedient, beeinflusst, hervorgerufen oder eingegeben werden können.

Als drahtlose Kommunikationsverbindung zwischen dem Fernsteuerelement und der Rechnereinheit kommt eine Funkverbindung, die dem Bluetooth-Standard oder dem WLAN-Standard entspricht, eine GSM- oder UMTS-Funkverbindung insbesondere unter Zuhilfenahme von mit dem Fernsteuerelement und der Rechnereinheit kommunizierenden Mobiltelefonen, oder eine andere beliebige Funkverbindung zum Einsatz. Selbstverständlich ist ebenfalls eine Verbindung über das Internet realisierbar, beispielsweise durch Einsatz eines einen Internetprovider anwählenden, mit dem Fernsteuerelement kommunizierenden Mobiltelefons, wobei die Rechnereinheit entweder ebenfalls über ein Mobiltelefon oder mittels einer Drahtverbindung mit dem Internet verbunden ist.

Unter dem Distanzvermesser ist neben derjenigen Person, die die eigentliche Vermessung durchführt, natürlich auch jede andere Person gemeint, die in dem Distanzmessvorgang in irgend einer Form involviert ist.

In einer weiteren allgemeinen Ausführungsform der Erfindung führt die Vermessungsapplikation eine Analyse des aufgenommenen Messwerts durch und sendet eine von dem Ergebnis der Analyse abhängige Anweisung an den Distanzvermesser. Dieses besonders bei Kontrollmessungen einsetzbare Verfahren ist beispielsweise derart darstellbar, dass der Distanzvermesser zuerst eine Gesamtdistanz misst, die nach der Messung von der Vermessungsapplikation überprüft wird. Entspricht die gemessene Gesamtdistanz dem Soll, so ist die Messung beendet und der Distanzvermesser erhält eine entsprechende Anweisung zur Beendigung der Messvorgänge, wohingegen bei einer Abweichung die Anweisung zur Durchführung weiterer Messungen, nämlich die Messung von Teildistanzen der Gesamtdistanz, an den Distanzvermesser erfolgt. Auch ist es möglich, zuerst die Vermessung einer Diagonalen durch den Raum durch den Distanzvermesser durchzuführen zu lassen, im Anschluss den gewonnenen Distanzmesswert durch die Vermessungsapplikation mit der aus der Breite, der Länge und der Höhe des Raumes kalkulierten Soll-Diagonalen zu vergleichen und im Falle einer Abweichung die Anweisung an den Distanzvermesser zur Messung der Breite, der Länge und der Höhe des Raumes zu geben.

Eine weitere mögliche allgemeine Ausbildungsform der Erfindung sieht mehrere örtlich voneinander getrennte Fernsteuerelemente und mehrere örtlich voneinander getrennte Distanzmesselemente vor, wobei zwischen den mehreren Fernsteuerelementen und der Rechnereinheit mehrere drahtlose Kommunikationsverbindungen bestehen. Somit ist die oben beschriebene Interaktion zwischen mehreren Distanzvermessern und der Vermessungsapplikation möglich. Beispielsweise führen mehrere Distanzvermesser innerhalb eines Gebäudes Messungen in unterschiedlichen Räumen durch und ordnen unter Verwendung der Fernsteuerelemente die gewonnenen Messwerte durch Eintragen der Messwerte in eine einzige gemeinsame elektronische Zeichnung der Vermessungsapplikation zu. Eine Interaktion der mehreren Distanzvermesser untereinander über die Vermessungsapplikation erfolgt insbesondere, indem bereits zugeordnete Messwerte abgerufen werden und somit wiederholte Messungen durch unterschiedliche Distanzvermesser vermieden werden. Ebenfalls sind Vergleichsmessungen realisierbar, indem unterschiedliche Distanzvermesser zu vergleichende Objekte, beispielsweise sich gleichende Räume auf unterschiedlichen Stockwerken, zeitgleich vermessen, wobei die Messwerte von der Vermessungsapplikation verglichen werden. Bei allfälligen Unterschieden erfolgt eine Anweisung an die Distanzvermesser, weitere Messungen durchzuführen. Selbstverständlich ist auch diese Ausführungsform unter Einsatz mehrerer, mit dem Internet verbundener Mobiltelefone möglich.

Weitere Vorteile ergeben sich durch die Aufnahme und die insbesondere drahtlose Übertragung eines mit dem Distanzmesswert verknüpften Azimutwerts, der die horizontale Ausrichtung des Distanzmesselements z.B. bezüglich des magnetischen Nordpols zum Zeitpunkt des Distanzmessvorgangs wiedergibt. Somit ist es möglich, neben dem Zuordnen des Distanzmesswerts über das Fernsteuerelement auch jeweils einen zugehörigen Azimutwert oder Horizontalausrichtungsmesswert zuzuordnen, wodurch ein automatisches Erkennen der Messrichtung erfolgen kann. Hierdurch sind Distanzmesswerte insbesondere bei vordefinierten Messfolgen automatisch durch die Vermessungsapplikation zuordenbar. Soll beispielsweise die Länge und die Breite eines Raumes vermessen werden, kann das Zuordnen eines Distanzmesswerts unter Zuhilfenahme des Horizontalausrichtungsmesswerts automatisch erfolgen. Zusätzlich oder alternativ ist der Einsatz eines die Neigung des Distanzmesselements zur Zeitpunkt der Messung aufnehmenden Neigungssensors möglich, wodurch beispielsweise automatisch durch die Vermessungsapplikation zwischen Horizontal- und Vertikalmessungen unterschieden wird. Soll z.B. die Höhe, die Breite und die Länge eines Raumes vermessen werden, so erfolgt die Zuordnung der drei Messwerte unter Zuhilfenahme des Azimut- und Neigungsmesswerts automatisch über die Vermessungsapplikation. Unterschiedliche Sensoren zur Horizontal- und Vertikalausrichtungsmessung sind aus dem Stand der Technik bekannt. Neben unterschiedlichen elektronischen Kompass- und Neigungssensorsystemen ist auch der Einsatz eines Inertialsensors, beispielsweise in Form eines Kreisels oder Gyros, möglich, der entweder die Horizontal- oder Vertikalausrichtung, oder beide Ausrichtungen erfasst.

Vor allem bei Distanzmessungen, die im Rahmen eines Gutachtens erstellt werden, ist die Dokumentation und Reproduktion einer Distanzmessaufnahme von grosser Bedeutung. Daher besitzt eine weitere alternative Ausführungsform eine Kamera, insbesondere eine CCD oder CMOS Kamera, die mechanisch mit dem Distanzmesselement verbunden ist. Diese Kamera führt zeitnah zu dem Messen und Aufnehmen des Distanzmesswerts eine den Messvorgang des Distanzmesswerts dokumentierende und das Messobjekt zumindest teilweise darstellende Bildaufnahme durch, wobei das aufgenommene Bild an die Vermessungsapplikation zu Dokumentationszwecken insbesondere über die drahtlose Kommunikationsverbindung übertragen wird. Die Auslösung der Bildaufnahme erfolgt beispielsweise durch die manuelle Auslösung der Aufnahme des Distanzmesswerts durch den Distanzvermesser. Die einem Messwert zugeordnete Bildaufnahme kann innerhalb der elektronischen Zeichnung mit dem dazugehörigen Messwert z.B. per Hyperlink verknüpft werden, so dass eine einfache Nachvollziehbarkeit der Messung möglich ist.

Das Fernsteuerelement ist entweder zusammen mit dem Distanzmesselement in einem gemeinsamen Gehäuse in Form einer einzigen Funktionseinheit oder separat in einem zweiten Gehäuse angeordnet, wobei im letzteren Fall das Distanzmesselement und das Fernsteuerelement jeweils Teil einer selbständigen Funktionseinheit sind. Im ersten Fall erfolgt die Übertragung des Messwerts von der einzigen Funktionseinheit vorzugsweise über die drahtlose Kommunikationsverbindung, wohingegen im letzteren Fall vorzugsweise in einem ersten Schritt eine Übertragung des Messwerts von der Funktionseinheit mit dem Distanzmesselement an die Funktionseinheit mit dem Fernsteuerelement erfolgt und in einem zweiten Schritt der Distanzmesswert über die drahtlose Kommunikationsverbindung an die Rechnereinheit übertragen wird. Die Übertragung des Messwerts von der einen zur anderen Funktionseinheit erfolgt entweder über eine Drahtverbindung oder über eine zweite drahtlose Kommunikationsverbindung, vorzugsweise eine Kurzstrecken-Funkverbindung, wie beispielsweise eine Bluetooth-Verbindung.

Der Verfahrensschritt des Steuerns des Zuordnens des Distanzmesswerts zu einer von der Vermessungsapplikation verarbeitbaren Grösse durch Ermöglichen der Interaktion zwischen dem Distanzvermesser und der Vermessungsapplikation über das Fernsteuerelement und der Verfahrensschritt des Steuerns und/oder Auslösens des Übertragens des Distanzmesswerts an die Vermessungsapplikation wird insbesondere in Form eines Computerprogrammprodukts, beispielsweise als Software oder Firmware, gespeichert und von Berechnungsmitteln vorzugsweise des Fernsteuerelements und/oder der Rechnereinheit ausgeführt.

Weiters ist es möglich, über die Vermessungsapplikation Konfigurationen des Distanzmesselements und/oder des Fernsteuerelements durchzuführen. So ist es möglich, Messeinstellungen und Grundeinstellungen des Distanzmesselements von der Rechnereinheit aus vorzunehmen und somit die Einstellungen beispielsweise unter Zuhilfenahme eines grossen Monitors und einer Computertastatur komfortabel und schnell durchzuführen. Mögliche Einstellungen des Distanzmesselements sind z.B. ein Masszuschlag oder Massabzug, eine Masseinheitbestimmung, eine Selbstauslöserzeit, eine Messstrahlbetriebsart, die Auswahl eines möglichen Endstücks, die Sprachauswahl, Signaltoneinstellungen, Bildanzeigebeleuchtungseinstellungen, Minimal- und Maximaltrackingeinstellungen und Speicherwertbearbeitungen. Die Einstellungen werden ebenfalls über die drahtlose Kommunikationsverbindung an die Distanzmesseinheit, die insbesondere in der Distanzmess-Einheit angeordnet ist, gesendet.

Die Vermessungsapplikation, die gegebenenfalls die oben dargestellte Konfigurationsmöglichkeit des Distanzmesselements und/oder des Fernsteuerelements umfasst, ist in einer möglichen Ausführungsform auf der Rechnereinheit gespeichert und wird von dieser ausgeführt. In einer alternativen Ausführungsform ist die Vermessungsapplikation hingegen in der Fernsteuereinheit oder der Distanzmesseinheit auf einer dort untergebrachten Speichereinheit gespeichert und wird über die drahtlose Kommunikationsverbindung - zumindest teilweise - an die Rechnereinheit übertragen, um dort - zumindest in Teilbereichen und temporär - ausgeführt zu werden. Die Ausführung der Vermessungsapplikation wird in diesem Fall von einem allgemeinen Internetbrowser, der auf der Rechnereinheit installiert ist, durchgeführt. In diesem Fall übernimmt die Distanzmesseinheit oder die Fernsteuereinheit die Funktion eines Servers, der mit dem Client, der von der Rechnereinheit gebildet wird, in drahtloser Kommunikationsverbindung steht. Die Vermessungsapplikation wird in diesem Fall beilspielsweise als so genanntes Applet an den Browser der Rechnereinheit übertragen, um dort ausgeführt zu werden. Ein Vorteil dieses Verfahrens besteht insbesondere darin, dass keine speziellen Softwareinstallationen und - bei Einsatz eines verbreiteten Übertragungsstandards wie Bluetooth oder WLAN - Hardwareinstallationen auf der Rechnereinheit erforderlich sind, da die Vermessungsapplikation, die gegebenenfalls auch den oben genannten Konfigurationszwecken dient, an die Rechnereinheit übertragen wird und universelle Internetsoftwarekomponenten und Internetstandards zum Einsatz kommen. Vor allem zu Konfigurationszwecken erweist sich dieses Verfahren als vorteilhaft, da Einstellungen der Distanzmesseinheit oder der Fernsteuereinheit nicht über kleine Eingabe- und Darstellungselemente durchgeführt werden müssen, sondern über einen grossen Montitor und eine Computertastatur erfolgen können. Ein weiterer Vorteil dieses Verfahrens ist, dass lediglich diejenigen Elemente, die aus Platzgründen nicht problemlos in einem handlichen Gerät untergebracht werden können, nach aussen - in die Rechnereinheit - verlagert werden müssen. So ist es zwar problemlos möglich, auf kleinstem Raum durch den Einsatz moderner Datenspeicher grosse Datenmengen, beispielsweise die Vermessungsapplikation, zu speichern, jedoch erfordern die zur schnellen Verarbeitung dieser Datenmengen erforderlichen Prozessoren vor allem aufgrund der benötigten Kühlflächen und des Energiebedarfs viel Platz, der in einem handlichen Gerät, wie insbesondere einem Hand-Distanzmessgerät, nicht zur Verfügung steht. Grossflächige Anzeigemittel wie ein grosser Monitor können ebenfalls nicht in einem handlichen Gerät integriert werden, so dass auch hier auf die Komponenten der Rechnereinheit zurückgegriffen werden kann.

Die erfindungsgemässe Vorrichtung stellt ein Hand-Distanzmessgerät dar, mit einem Fernsteuerelement, Eingabemitteln und einem Distanzmesselement zum Messen einer Distanz zu einem Objekt und zum Aufnehmen eines Distanzmesswerts, wobei das Distanzmesselement, das Fernsteuerelement und die Eingabemittel in einem gemeinsamen Gehäuse angeordnet sind. Das Fernsteuerelement dient zur ferngesteuerten Bedienung einer Vermessungsapplikation, die on einer externen Rechnereinheit ausgeführt wird, und umfasst Kommunikationsmittel zur Schaffung einer drahtlosen Kommunikationsverbindung zu der externen Rechnereinheit zumindest für die Übertragung des Distanzmesswerts an die Vermessungsapplikation und von Signalen zur ferngesteuerten Bedienung der Vermessungsapplikation. Mittels der Eingabemittel werden abwechselnd - beispielsweise über Doppelbelegung von Tasten - oder gleichzeitig die Vermessungsapplikation über das Fernsteuerelement und das Distanzmesselement bedient. Die Eingabemittel sind insbesondere als bekannte Drucktastatur ausbildbar oder in Form eines berührungssensitiven Bildschirms mit optischen Anzeigemitteln kombinierbar. Neben dieser Form eines Anzeigemittels sind auch andere, in oder auf dem gemeinsamen Gehäuse angeordnete optische Anzeigemittel, wie beispielsweise eine bekannte Bildanzeige, insbesondere ein LCD Bildschirm, realisierbar. Über die optischen Anzeigmittel sind zumindest ein aufgenommener Distanzmesswert und Informationen, die einen aktuellen Status der Vermessungsapplikation betreffen, darstellbar.

In einer Ausbildungsform des Hand-Messgeräts ist in dem gemeinsamen Gehäuse ausserdem ein Neigungssensor zur Bestimmung der vertikalen Ausrichtung und/oder ein elektronischer Kompass zur Bestimmung der horizontalen Ausrichtung des Distanzmesselements zum Zeitpunkt eines Distanzmessvorgangs angeordnet, wobei ein Vertikalausrichtungsmesswert bzw. ein Horizontalausrichtungsmesswert über die drahtlose Kommunikationsverbindung an die Vermessungsapplikation übertragbar ist. Alternativ oder ausserdem ist eine Inertialsensor - insbesondere in Form eines Kreisels oder Gyros - in dem gemeinsamen Gehäuse angeordnet, wodurch ein Vertikalausrichtungsmesswert und/oder ein Horizontalausrichtungsmesswert ermittelbar ist oder ein von dem Neigungssensor und/oder dem elektronischen Kompass gemessener Wert korrigiert werden kann.

Weiters ist - in einer weiteren Ausführungsform der Erfindung - in dem gemeinsamen Gehäuse eine Kamera - insbesondere eine CCD oder CMOS Kamera - zur den Messvorgang des Distanzmesswerts dokumentierenden und das Messobjekt zumindest teilweise darstellenden Bildaufnahme integriert. Ein aufgenommenes Bild wird über die drahtlose Kommunikationsverbindung an die Vermessungsapplikation zu Dokumentationszwecken übertragen, so dass zu einem späteren Zeitpunkt die Entstehung eines Messwerts nachvollzogen werden kann.

Ferner weist das Hand-Distanzmessgerät in einer möglichen Variante der Erfindung in dem gemeinsamen Gehäuse einen Datenspeicher zur Speicherung der Vermessungsapplikationsdaten auf, wobei die Vermessungsapplikationsdaten an die Rechnereinheit zum dortigen Ausführen über die drahtlose Kommunikationsverbindung übertragbar sind. Der Datenspeicher ist auch als ein aus dem gemeinsamen Gehäuse entfernbarer Speicher beispielsweise in Form eines so genannten Memory-Sticks ausbildbar.

Das erfindungsgemässe Verfahren und die erfindungsgemässe Vorrichtung wird nachfolgend anhand von in den Zeichnungen schematisch dargestellten konkreten Ausführungsbeispielen näher beschrieben, wobei auch auf weitere Vorteile der Erfindung eingegangen wird. Im Einzelnen zeigen:
- Fig. 1: ein Hand-Distanzmessgerät, das in einer drahtlosen Kommunikationsverbindung mit einer externen Rechnereinheit steht,
- Fig. 2: das Schema eines einteiligen Hand-Messgeräts mit einem Distanzmesselement, einem Fernsteuerelement, einem elektronischen Kompass, einem Neigungssensor und einer Kamera,
- Fig. 3: ein zweiteiliges, drahtlos verbundenes System mit einer Distanzmess-Einheit und einer Fernsteuer-Einheit in schematischer Darstellung und
- Fig. 4: mehrere in unterschiedlichen Räumen zum Einsatz kommende Hand-Distanzmessgeräte, die jeweils in drahtloser Kommunikationsverbindung mit der externen Rechnereinheit stehen.

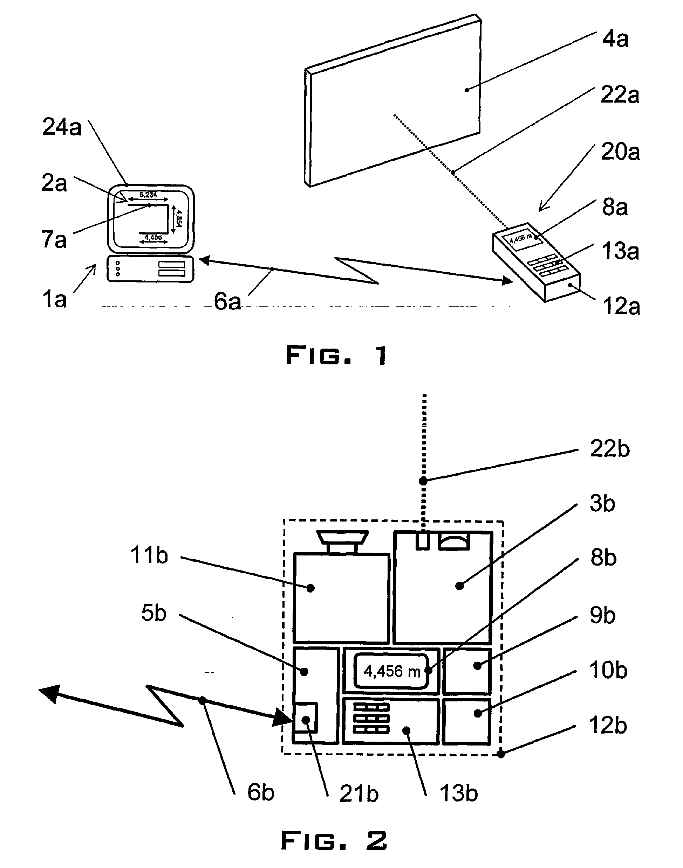

Fig. 1 stellt eine mögliche erste Ausführungsform des erfindungsgemässen Verfahrens und der erfindungsgemässen Vorrichtung dar. Ein Distanzvermesser (nicht dargestellt) misst unter Zuhilfenahme eines Hand-Distanzmessgeräts 20a eine Distanz zu einem Objekt 4a, das hier symbolisch in Form einer Wand dargestellt ist. Das Hand-Distanzmessgerät 20a weist innerhalb eines gemeinsamen Gehäuses 12a ein Distanzmesselement 3b, ein Fernsteuerelement 5b (siehe jeweils Fig. 2), optische Anzeigemittel 8a und Eingabemittel 13a auf. Der Distanzmessvorgang erfolgt mittels eines Lasermessstrahls 22a auf eine bekannte Art, beispielsweise mittels Phasenmessung oder Laufzeitmessung. Der Aufruf des Messvorgangs erfolgt über die Eingabemittel 13a durch eine auf dem Hand-Distanzmessgerät 20a angeordnete Tastatur. Der hierdurch aufgenommene Distanzmesswert wird auf den optischen Anzeigemitteln 8a, die in Form einer LCD Anzeige im Hand-Distanzmessgerät 20a integriert sind, angezeigt. Das im Hand-Distanzmessgerät 20a angeordnete Fernsteuerelement steht in einer drahtlosen Kommunikationsverbindung 6a mit einer Rechnereinheit 1a, die von einem aus dem Stand der Technik bekannten Personalcomputer gebildet wird. Die drahtlose Kommunikationsverbindung 6a erfolgt insbesondere unter Anwendung des bekannten Bluetooth-Standards. Auf der Rechnereinheit 1a wird eine Vermessungsapplikation 2a ausgeführt, die eine graphische Konstruktion eines geometrischen Gebildes, insbesondere in Form eines Gebäudeplans, ermöglicht. In Fig. 1 ist symbolisch ein mit der Vermessungsapplikation 2a erzeugtes graphisches Konstruktionsobjekt 7a, hier eine Konstruktionslinie, die auf einem Monitor 24a der Rechnereinheit 1a dargestellt wird, abgebildet. Nach der Aufnahme des Distanzmesswerts mittels des Hand-Distanzmessgeräts 20a wird über-die drahtlose Kommunikationsverbindung 6a der gemessene Distanzmesswert an die Vermessungsapplikation 2a übertragen. Die Übertragung löst der Distanzvermesser durch eine Befehlseingabe in die Eingabemittel 13a aus. Nach der Übertragung des Distanzmesswerts ordnet der Benutzer nämlichen Distanzmesswert einer von der Vermessungsapplikation 2a verarbeitbaren Grösse zu. Dies erfolgt hier, indem der Benutzer über die Eingabemittel 13a, die als Cursor-Tasten verwendet werden, eine Startposition, eine Ausrichtung, beispielsweise in 45 oder 90 Grad Schritten, und gegebenenfalls die vollziehende mathematische Operation, beispielsweise eine Addition, festlegt. Hierdurch trägt der Distanzvermesser den gemessenen Distanzmesswert in Form einer Konstruktionslinie 7a in die Vermessungsapplikation 2a ein. Dieser Vorgang des Zuordnens des Distanzmesswerts erfolgt entweder, sofern die Rechnereinheit 1a in Sichtweite des Distanzvermessers ist, unter Zuhilfenahme des Monitors 24a der Rechnereinheit 1a, oder der Anzeigemittel 8a des Hand-Distanzmessgeräts 20a, die den aktuellen Status der Vermessungsapplikation 2a, beispielsweise in Form eines Ausschnitts eines von der Vermessungsapplikation 2a erzeugten Bildes, darstellen. Auf die beschriebene Weise werden mehrere Distanzmesswerte nacheinander in die Vermessungsapplikation 2a eingetragen, so dass ein gesamter Gebäudeplan erstellbar ist. Selbstverständlich ist es ebenfalls möglich, komplexere Zuordnungsoperationen über die drahtlose Kommunikationsverbindung 6a durchzuführen, beispielsweise pythagoräische Operationen oder die Konstruktion komplexer dreidimensionaler Körper. Während der gesamten Messvorgänge ist kein direktes Bedienen der Rechnereinheit 1a erforderlich, da die gesamte Bedienung der Vermessungsapplikation 2a über die Eingabemittel 13a des Hand-Distanzmessgeräts 20a erfolgt. Umfangreiche Messvorgänge können somit, ergonomisch optimiert, innerhalb kürzerer Zeit vollzogen werden. Da die Vermessungsapplikation 2a nicht von dem Hand-Distanzmessgerät 20a, sondern von der Rechnereinheit 1a ausgeführt wird, ist keine ausserordentlich grosse, zur Ausführung der Vermessungsapplikation 2a erforderlichen Rechenleistung und Speicherkapazität des Hand-Distanzmessgeräts 20a erforderlich. Ausserdem ist es möglich, die Rechnereinheit 1a an einem vor Umwelteinflüssen geschützten Ort unterzubringen, was besonders bei Baustellenmessungen von erheblichem Vorteil ist. Gegebenenfalls kann eine zweite Person, beispielsweise ein Architekt, der die Rechnereinheit in seinem Büro bedient, dem auf der Baustelle befindlichen Distanzvermesser gezielt Anweisung über die drahtlose Kommunikationsverbindung geben, in welcher Form weitere Messungen durchzuführen sind. Diese Anweisungen werden beispielsweise von den optischen Anzeigemitteln 8a wiedergeben.

Fig. 2 zeigt eine Ausführungsform eines Hand-Distanzmessgeräts in einer schematischen Detaildarstellung. Innerhalb eines gemeinsamen Gehäuses 12b sind ein Distanzmesselement 3b, ein Fernsteuerelement 5b mit Kommunikationsmitteln 21b für eine drahtlose Kommunikationsverbindung 6b mit der Rechnereinheit (siehe Fig. 1), optische Anzeigemittel 8b in Form einer LCD-Bildanzeige, Eingabemittel 13b in Form einer Tastatur, ein elektronischer Kompass 9b, ein Neigungssensor 10b und eine Kamera 11b angeordnet. Das Distanzmesselement 3b ermöglicht mittels eines Lasermessstrahls 22b die Messung einer Distanz zu einem Objekt. Über die Kamera 11b wird der Messvorgang durch eine zeitnah zum Messvorgang durchgeführte Bildaufnahme dokumentiert, die zumindest einen Teil des Messobjekts, auf das mittels des Lasermessstrahls 22b gemessen wurde, zeigt. Der elektronische Kompass 9b und der Neigungssensor 10b ermöglichen die Aufnahme eines Horizontal- und Vertikalausrichtungswerts zum Zeitpunkt des Distanzmessvorgangs. Der gemessene Distanzmesswert, die Ausrichtungswerte und die Bildaufnahme sind über die optischen Anzeigemittel 8b darstellbar. Beispielsweise durch Eingabe eines Steuerbefehls in die Eingabemittel 13b werden die aufgenommenen Daten mittels der Kommunikationsmittel 21b des Fernsteuerelements 5b über die drahtlose Kommunikationsverbindung 6b an die Vermessungsapplikation (siehe Fig. 1) gesendet. Durch Eingabe eines weiteren Steuerbefehls in die Eingabemittel 13b, der ebenfalls über die drahtlose Kommunikationsverbindung 6b an die Vermessungsapplikation gesendet wird, ordnet der Benutzer des Hand-Distanzmessgeräts die aufgenommenen Werte zu, beispielsweise durch Bestimmung einer Anfangsposition einer graphischen Konstruktionslinie, wobei die Ausrichtung und die Länge dieser Konstruktionslinie durch die aufgenommenen Werte bestimmt werden.

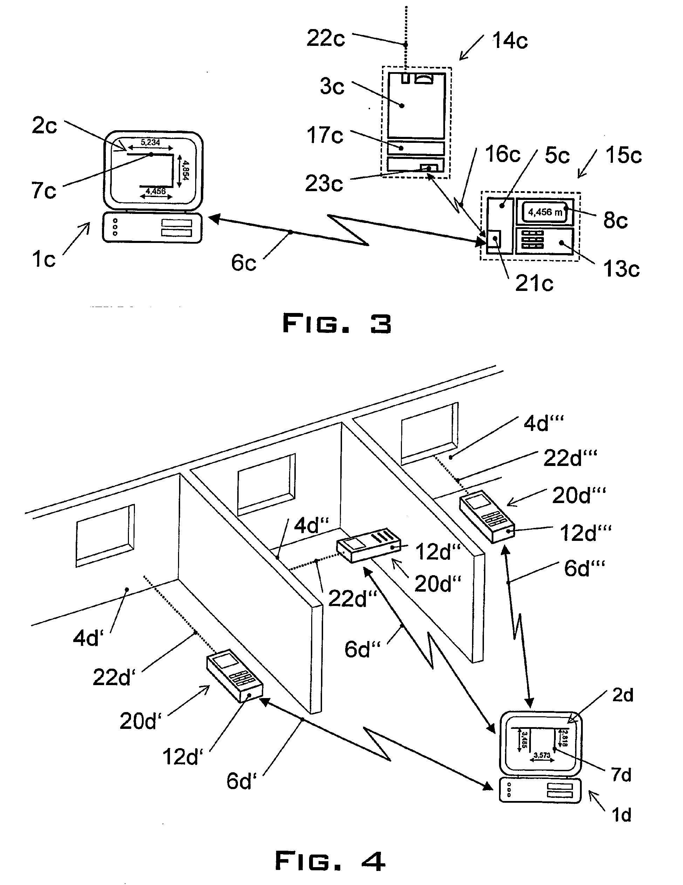

In Fig. 3 ist eine weitere Ausführungsform der Erfindung dargestellt. Während in Fig. 2 das Distanzmesselement 3b und das Fernsteuerelement 5b in einem gemeinsamen Gehäuse angeordnet sind, weist die in Fig. 3 gezeigte Ausführungsform eine Distanzmess-Einheit 14c mit einem Distanzmesselement 3c und eine Fernsteuer-Einheit 15c mit einem Fernsteuerelement 5c auf, wobei die beiden Einheiten 14c, 15c örtlich separiert sind und über eine zweite drahtlose Kommunikationsverbindung 16c verbunden sind. Die Distanzmess-Einheit 14c umfasst neben dem Distanzmesselement 3c, mit welchem Distanzmessungen über einen Lasermessstrahl 22c durchführbar sind, einen Inertialsensor 17c, mit welchem die horizontale und die vertikale Ausrichtung der Distanzmess-Einheit 14c aufnehmbar sind, und Fernsteuer-Einheit-Kommunikationsmittel 23c zur Schaffung der zweiten drahtlosen Kommunikationsverbindung 16c zu der Fernsteuer-Einheit 15c. Die Distanzmess-Einheit 14c ist beispielsweise als ein kleines Handgerät ausgebildet, das gegebenenfalls auch Eingabemittel und optische Anzeigemittel zur Durchführung einer einfachen Distanzmessung ohne Weiterverarbeitung erlaubt und eine Bluetooth-Schnittstelle als Fernsteuer-Einheit-Kommunikationsmittel 23c aufweist. Selbstverständlich ist-auch die Verwendung eines anderen Funkstandards möglich. Die Fernsteuer-Einheit 15c umfasst ein Fernsteuerelement 5c mit Kommunikationsmittel 21c, optische Anzeigemittel 8c und Eingabemittel 13c. Die Kommunikationsmittel 21c ermöglichen sowohl die zweite drahtlose Kommunikationsverbindung 16c zu der Distanzmess-Einheit 14c, als auch eine drahtlose Kommunikationsverbindung 6c zu einer Rechnereinheit 1c, von der eine Vermessungsapplikation 2c ausgeführt wird. Die Fernsteuer-Einheit 15c wird beispielsweise von einem sogenannten Smart-Phone, einem Mobiltelefon mit Graphikbildschirm, Tastatur, Pocket-PC Funktionalität und Bluetooth-Schnittstelle gebildet, wobei die optischen Anzeigemittel 8c durch den Graphikbildschirm, die Eingabemittel 13c durch die Tastatur und das Fernsteuerelement 5c mit den Kommunikationsmitteln 21c durch das GSM-/UMTS-Modul und das Bluetooth-Modul gebildet werden. Bei Durchführung einer Distanzmessung mit der Distanzmess-Einheit 14c wird neben dem Distanzmesswert über den Inertialsensor 17c der Horizontal- und der Vertikalausrichtungswert der Distanzmess-Einheit 14c aufgenommen und die Werte über die zweite drahtlose Kommunikationsverbindung 16c an die Fernsteuer-Einheit 15c gesendet. Von dort kann ein Benutzer durch Eingabe eines Steuerbefehls in die Eingabemittel 13c die Übertragung der Werte über die drahtlose Kommunikationsverbindung 6c an die Vermessungsapplikation 2c veranlassen. Wie in Fig. 2 ist es möglich, dass der Benutzer der Fernsteuer-Einheit 15c durch Eingabe eines weiteren Steuerbefehls in die Eingabemittel 13c, der ebenfalls über die drahtlose Kommunikationsverbindung 6c an die Vermessungsapplikation 2c gesendet wird, die aufgenommenen Werte zuordnet, beispielsweise durch Bestimmung einer Anfangsposition einer graphischen Konstruktionslinie 7c, wobei die Ausrichtung und die Länge dieser Konstruktionslinie durch die aufgenommenen Werte bestimmt werden. Diese in Fig. 3 schematisch dargestellte Ausführungsform ist in Form eines um ein Bluetooth-Modul erweitertes Hand-Distanzmessgeräts, einem bekannten Smart-Phone mit entsprechender Software und einem mit dem Internet in Verbindung stehenden Personalcomputer, von dem die Vermessungsapplikation ausgeführt wird, realisierbar. In diesem Fall erfolgt die drahtlose Kommunikationsverbindung 6c z.B. über das GSM- oder UMTS-Netz, indem das Smart-Phone durch Einwahl bei einem Internet-Provider mit dem Personalcomputer in Verbindung steht. Die Interaktion zwischen der Vermessungsapplikation 2c und dem Benutzer erfolgt in diesem Fall über das Smart-Phone durch Eingabe von Steuerbefehlen in die Tastatur und Darstellung von Informationen, die einen aktuellen Status der Vermessungsapplikation 2c betreffen, auf dem Graphikbildschirm des Smart-Phones.

Fig. 4 stellt eine weitere Ausbildungsform dar, in welcher mehrere hier drei Hand - Distanzmessgeräte 20d', 20d", 20d"' örtlich voneinander getrennt zeitgleich in unterschiedlichen Räumen zum Einsatz kommen. Die drei Hand-Distanzmessgeräte 20d', 20d", 20d"' entsprechen im Wesentlichen dem Hand-Distanzmessgeräte 20a von Fig. 1 und beinhalten die oben beschriebenen Elemente in jeweils einem gemeinsamen Gehäuse 12d', 12d", 12d"'. Drei unterschiedliche Objekte 4d', 4d", 4d"' werden in drei unterschiedlichen Räumen mittels dreier Lasermessstrahlen 22d', 22d", 22d"' vermessen. Die drei Hand-Distanzmessgeräte 20d', 20d", 20d"' stehen jeweils über eine drahtlose Kommunikationsverbindung 6d', 6d", 6d"' mit einer Rechnereinheit 1d, auf welcher eine Vermessungsapplikation 2d ausgeführt wird, in Verbindung. Gemessenen Distanzwerte in drei unterschiedlichen Räumen werden von den drei Benutzern der Distanzmessgeräte 20d', 20d", 20d"' über die drahtlosen Kommunikationsverbindungen 6d', 6d", 6d"' in eine gemeinsame elektronische Zeichnung eingetragen, wobei durch Zusammenwirken der drei Distanzvermesser ein graphisches Konstruktionsobjekt 7d erstellt wird. Ausserdem ist es möglich, dass eine vierte Person die Koordination der drei Distanzvermesser durch Steuerung der Vermessungsapplikation direkt an der Rechnereinheit übernimmt. Eine Interaktion der drei Distanzvermesser untereinander über die Vermessungsapplikation 2d erfolgt beispielsweise auch, indem bereits zugeordnete Messwerte abgerufen werden und somit wiederholte Messungen durch unterschiedliche Distanzvermesser vermieden werden. Ausserdem können mit dem gezeigten System Vergleichsmessungen durch gleichzeitiges Vermessen von drei zu vergleichenden Objekte durch drei Distanzvermesser zeitgleich durchgeführt werden, wobei die Messwerte von der Vermessungsapplikation verglichen werden. Ergeben sich hierbei Unterschiede zwischen den zu vergleichenden Objekten, die nicht im Rahmen einer vorgegebenen Toleranz liegen, so erfolgt eine Anweisung an die drei Distanzvermesser durch die Vermessungsapplikation, weitere Testmessungen zur genauen Verifikation der Abweichungen durchzuführen. Die Anzahl der mit der Vermessungsapplikation in drahtloser Kommunikationsverbindung stehenden Distanzvermesser ist natürlich nicht auf drei beschränkt.

Selbstverständlich beschränkt sich die Erfindung nicht auf die rein exemplarischen Ausführungsbeispiele der Figuren 1 bis 4.

## Patentansprüche

1. Verfahren zur Interaktion zwischen einem Distanzvermesser und einer Vermessungsapplikation, mit einem System mit
- einer Rechnereinheit (1a, 1c, 1d) zur Ausführung der Vermessungsapplikation (2a, 2c, 2d),
- einem Distanzmesselement (3b, 3c) zum Messen einer Distanz zu einem Objekt (4a, 4d) und Aufnehmen eines Distanzmesswerts, und
- einem Fernsteuerelement (5b, 5c), das zur Interaktion zwischen dem Distanzvermesser und der Vermessungsapplikation (2a, 2c, 2d) in drahtloser Kommunikationsverbindung (6a, 6b, 6c, 6d) mit der Rechnereinheit (1a, 1c, 1d) steht,
mit den Schritten
- Messen und Aufnehmen des Distanzmesswerts durch das Distanzmesselement (3b, 3c), gesteuert durch den Distanzvermesser,
- Zuordnen des Distanzmesswerts zu einer von der Vermessungsapplikation (2a, 2c, 2d) verarbeitbaren Grösse durch Interaktion zwischen dem Distanzvermesser und der Vermessungsapplikation (2a, 2c, 2d) über das Fernsteuerelement (5b, 5c), und
- Übertragen des Distanzmesswerts an die Vermessungsapplikation (2a, 2c, 2d)
**dadurch gekennzeichnet, dass** die Vermessungsapplikation (2a, 2c, 2d) vor dem Ausführen von dem Fernsteuerelement (5b, 5c) an die Rechnereinheit (1a, 1c, 1d) über die drahtlose Kommunikationsverbindung (6a, 6b, 6c, 6d) übertragen wird.

2. Verfahren nach Anspruch 1, wobei zuerst das Zuordnen des Distanzmesswerts, der aufzunehmen ist, und anschliessend das Messen und Aufnehmen des Distanzmesswerts erfolgt.

3. Verfahren nach Anspruch 1, wobei das Zuordnen des Distanzmesswerts nach dem Übertragen des Distanzmesswerts erfolgt.

4. Verfahren nach einem der vorangegangenen Ansprüche, **dadurch gekennzeichnet, dass** das Zuordnen des Distanzmesswerts durch mindestens einen von dem Distanzvermesser in das Fernsteuerelement (5b, 5c) eingegebenen Steuerbefehl erfolgt.

5. Verfahren nach Anspruch 4, **dadurch gekennzeichnet, dass** durch die Eingabe des Steuerbefehls der Distanzmesswert einem von der Vermessungsapplikation (2a, 2c, 2d) zur Verfügung gestellten graphischen Konstruktionsobjekt (7a, 7c, 7d) zugeordnet wird.

6. Verfahren nach Anspruch 5, **dadurch gekennzeichnet, dass** durch das Zuordnen eine Definition einer Grösse und/oder eine Festlegung einer Ausrichtung des graphischen Konstruktionsobjekts (7a, 7c, 7d) erfolgt.

7. Verfahren nach Anspruch 6, **dadurch gekennzeichnet, dass** das graphische Konstruktionsobjekt (7a, 7c, 7d) eine vereinfachte graphische Darstellung zumindest eines Teils des in Form des Distanzmesswerts vermessenen oder zu vermessenden Objekts (4a, 4d) bildet.

8. Verfahren nach einem der vorangegangenen Ansprüche, **dadurch gekennzeichnet, dass** der Distanzvermesser vor dem Messen und Aufnehmen, Zuordnen und Übertragen des Distanzmesswerts über das Fernsteuerelement (5b, 5c) eine in der Vermessungsapplikation (2a, 2c, 2d) gespeicherte Messfolge aufzunehmender Distanzmesswerte festlegt oder auswählt.

9. Verfahren nach einem der vorangegangenen Ansprüche, **dadurch gekennzeichnet, dass** Informationen, die einen aktuellen Status der Vermessungsapplikation (2a, 2c, 2d) betreffen, von optischen Anzeigemitteln (8a, 8b, 8c), die zumindest teilweise dem Fernsteuerelement (5b, 5c) zugeordnet sind, angezeigt werden.

10. Verfahren nach Anspruch 9, **dadurch gekennzeichnet, dass** die angezeigten Informationen eine Anweisung an den Distanzvermesser bilden, in welcher Form das Messen und Aufnehmen des Distanzmesswerts zu erfolgen hat.

11. Verfahren nach Anspruch 10, **dadurch gekennzeichnet, dass** die Anweisung von einer zeitnah von der Vermessungsapplikation (2a, 2c, 2d) durchgeführten Analyse mindestens eines zuvor aufgenommenen Distanzmesswerts abhängt.

12. Verfahren nach einer der Ansprüche 9 bis 11, **dadurch gekennzeichnet, dass** die Anzeigemittel (8a, 8b, 8c) als eine Bildanzeige, insbesondere ein LCD Bildschirm, ausgebildet sind und die Informationen von zumindest einem Teil eines von der Vermessungsapplikation (2a, 2c, 2d) erzeugten Bildes gebildet werden.

13. Verfahren nach einem der Ansprüche 9 bis 11, **dadurch gekennzeichnet, dass** die Anzeigemittel (8a, 8b, 8c) als eine berührungssensitive Bildanzeige, die auch als Eingabemittel verwendbar ist, ausgebildet sind.

14. Verfahren nach einem der vorangegangenen Ansprüche, **dadurch gekennzeichnet, dass** die Vermessungsapplikation (2a, 2c, 2d) ein visuelles Darstellen von Bauwerken ermöglicht.

15. Verfahren nach einem der vorangegangenen Ansprüche, **dadurch gekennzeichnet, dass** zeitnah zu dem Messen und Aufnehmen des Distanzmesswerts ein diesem zuordenbarer Horizontalausrichtungsmesswert, beispielsweise ein Azimutwert, insbesondere durch einen mit dem Distanzmesselement (3b, 3c) mechanisch verbundenen elektronischen Kompass (9b) oder ersten Inertialsensor (17c), aufgenommen und an die Vermessungsapplikation (2a, 2c, 2d) übertragen wird.

16. Verfahren nach einem der vorangegangenen Ansprüche, **dadurch gekennzeichnet, dass** zeitnah zu dem Messen und Aufnehmen des Distanzmesswerts ein diesem zuordenbarer Vertikalausrichtungsmesswert, beispielsweise eine Neigungsmesswert, insbesondere durch einen mit dem Distanzmesselement (3b, 3c) mechanisch verbundenen Neigungssensor (10b), einen zweiten Inertialsensor oder den ersten Inertialsensor (17c), aufgenommen und an die Vermessungsapplikation (2a, 2c, 2d) übertragen wird.

17. Verfahren nach einem der vorangegangenen Ansprüche, **dadurch gekennzeichnet, dass** zeitnah zu dem Messen und Aufnehmen des Distanzmesswerts eine den Messvorgang des Distanzmesswerts dokumentierende und das Objekt (4a, 4d) zumindest teilweise darstellende Bildaufnahme über eine Kamera (11b), insbesondere eine CCD oder CMOS Kamera, die mechanisch mit dem Distanzmesselement (3b, 3c) verbunden ist, erfolgt und das aufgenommene Bild an die Vermessungsapplikation (2a, 2c, 2d) zu Dokumentationszwecken übertragen wird.

18. Verfahren nach einem der vorangegangenen Ansprüche, **dadurch gekennzeichnet, dass** die drahtlose Kommunikationsverbindung (6a, 6b, 6c, 6d) den Bluetooth-Standard oder den WLAN-Standard verwendet.

19. Verfahren nach einem der vorangegangenen Ansprüche, **dadurch gekennzeichnet, dass** die drahtlose Kommunikationsverbindung (6a, 6b, 6c, 6d) zumindest in einem Teilabschnitt über ein Mobiltelefonnetz, das insbesondere den GSM- oder UMTS-Standard verwendet, erfolgt.

20. Verfahren nach einem der vorangegangenen Ansprüche, **dadurch gekennzeichnet, dass** das Distanzmesselement (3b) und das Fernsteuerelement (5b) in einem gemeinsamen Gehäuse (12a, 12b, 12d) angeordnet sind und das Übertragen des Distanzmesswerts an die Vermessungsapplikation (2a, 2d) über die drahtlose Kommunikationsverbindung (6a, 6b, 6d) erfolgt.

21. Verfahren nach Anspruch 20, **dadurch gekennzeichnet, dass** innerhalb des gemeinsamen Gehäuses (12a, 12b, 12d) abwechselnd oder gleichzeitig dem Fernsteuerelement (5b) und dem Distanzmesselement (3b) zuordenbare Eingabemittel (13a, 13b) und/oder optische Anzeigemittel (8a, 8b) angeordnet sind.

22. Verfahren nach einem der Ansprüche 1 bis 19, **dadurch gekennzeichnet, dass** das Distanzmesselement (3c) in einer Distanzmess-Einheit (14c) und das Fernsteuerelement (5c) in einer Fernsteuer-Einheit (15c) örtlich voneinander getrennt angeordnet sind.

23. Verfahren nach Anspruch 22, **dadurch gekennzeichnet, dass** in aufeinander folgenden Schritten der von dem Distanzmesselement (3c) gemessene und aufgenommene Distanzmesswert von der Distanzmess-Einheit (14c) an das Fernsteuerelement (5c) der Fernsteuer-Einheit (15c) und über die drahtlose Kommunikationsverbindung (6c) von der Fernsteuer-Einheit (15c) an die Vermessungsapplikation (2c) übertragen wird.

24. Verfahren nach Anspruch 23, **dadurch gekennzeichnet, dass** das Übertragen des Distanzmesswerts von der Distanzmess-Einheit (14c) an die Fernsteuer-Einheit (15c) über eine zweite drahtlose Kommunikationsverbindung (16c) mit den Bluetooth-Standard erfolgt.

25. Verfahren nach einem der vorangegangenen Ansprüche, **dadurch gekennzeichnet, dass** das System mehrere Fernsteuerelemente (5b, 5c), die mit der Rechnereinheit (1a, 1c, 1d) in mehreren drahtlosen Kommunikationsverbindungen (6d', 6d", 6d"') stehen, und mehrere Distanzmesselemente (3b, 3c) aufweist, wobei über die mehreren Fernsteuerelemente (5b, 5c) eine Interaktion mehrerer Distanzvermesser untereinander und/oder zu der Vermessungsapplikation (2a, 2c, 2d) erfolgt und beispielsweise die mehreren Fernsteuerelemente (5b, 5c) und die mehrere Distanzmesselemente (3b, 3c) jeweils in gemeinsamen Gehäusen (12a, 12b, 12d', 12d", 12d"') angeordnet sind.

26. Hand-Distanzmessgerät mit einem Distanzmesselement (3b) zum Messen einer Distanz zu einem Objekt (4a, 4d) und zum Aufnehmen eines Distanzmesswerts, mit
- ein Fernsteuerelement (5b) zur ferngesteuerten Bedienung einer Vermessungsapplikation (2a, 2d), die von einer externen Rechnereinheit (1a, 1d) ausgeführt wird, mit Kommunikationsmitteln (21b) zur Schaffung einer drahtlosen Kommunikationsverbindung (6a, 6b, 6d) zu der externen Rechnereinheit (1a, 1d) zumindest für die Übertragung des Distanzmesswerts an die Vermessungsapplikation (2a, 2d) und Signalen zur ferngesteuerten Bedienung der Vermessungsapplikation (2a, 2d), und
- Eingabemittel (13a, 13b) zur abwechselnden oder gleichzeitigen Bedienung der Vermessungsapplikation (2a, 2d) über das Fernsteuerelement (5b) und des Distanzmesselements (3b),
wobei das Distanzmesselement (3b), das Fernsteuerelement (5b) und die Eingabemittel (13a, 13b) in einem gemeinsamen Gehäuse (12a, 12b, 12d) angeordnet sind,
**dadurch gekennzeichnet, dass**
in dem gemeinsamen Gehäuse (12a, 12b, 12d) ein Datenspeicher zur Speicherung von der Vermessungsapplikation angeordnet ist, wobei die Vermessungsapplikation an die Rechnereinheit (1a, 1d) vor dem dortigen Ausführen über die drahtlose Kommunikationsverbindung (6a, 6b, 6d) übertragen wird

27. Hand-Distanzmessgerät nach Anspruch 26, gekenntzeichnet durch optische Anzeigemittel (8a, 8b) zur Anzeige des aufgenommenen Distanzmesswerts und von Informationen, die einen aktuellen Status der Vermessungsapplikation (2a, 2d) betreffen, wobei die optischen Anzeigemittel (8a, 8b) in und/oder auf dem gemeinsamen Gehäuse (12a, 12b, 12d) angeordnet sind.

28. Hand-Distanzmessgerät nach Anspruch 27, **dadurch gekennzeichnet, dass** die optischen Anzeigemittel (8a, 8b) als eine Bildanzeige, insbesondere ein LCD Bildschirm, ausgebildet sind, wobei die Informationen von zumindest einem Teil eines von der Vermessungsapplikation (2a, 2d) erzeugten Bildes gebildet werden.

29. Hand-Distanzmessgerät nach Anspruch 27 oder 28, **dadurch gekennzeichnet, dass** die optischen Anzeigemittel (8a, 8b) und die Eingabemittel (13a, 13b) als eine berührungssensitive Bildanzeige ausgebildet sind.

30. Hand-Distanzmessgerät nach einem der Ansprüche 26 bis 29, **gekennzeichnet durch** einen Neigungssensor (10b) zur Bestimmung der vertikalen Ausrichtung des Distanzmesselements (3b), wobei ein Vertikalausrichtungsmesswert über die drahtlose Kommunikationsverbindung (6a, 6b, 6d) an die Vermessungsapplikation (2a, 2d) übertragbar und der Neigungssensor (10b) in dem gemeinsamen Gehäuse (12a, 12b, 12d) angeordnet ist.

31. Hand-Distanzmessgerät nach einem der Ansprüche 26 bis 30, **gekennzeichnet durch** einen elektronischen Kompass (9b) zur Bestimmung der horizontalen Ausrichtung des Distanzmesselements (3), wobei ein Horizontalausrichtungsmesswert über die drahtlose Kommunikationsverbindung (6a, 6b, 6d) an die Vermessungsapplikation (2a, 2d) übertragbar und der elektronische Kompass (9b) in dem gemeinsamen Gehäuse (12a, 12b, 12d) angeordnet ist.

32. Hand-Distanzmessgerät nach einem der Ansprüche 26 bis 29, **gekennzeichnet durch** mindestens einen Inertialsensor (17c) zur Bestimmung der Ausrichtung des Distanzmesselements, wobei ein Inertialsensormesswert - insbesondere ein Horizontalausrichtungsmesswert und/oder ein Vertikalausrichtungsmesswert - über die drahtlose Kommunikationsverbindung (6a, 6b, 6d) an die Vermessungsapplikation (2a, 2d) übertragbar und der mindestens eine Inertialsensor (17c) in dem gemeinsamen Gehäuse (12a, 12b, 12d) angeordnet ist.

33. Hand-Distanzmessgerät nach einem der Ansprüche 26 bis 32, **gekennzeichnet durch** eine Kamera (11b), insbesondere eine CCD oder CMOS Kamera, zur den Messvorgang des Distanzmesswerts dokumentierenden und das Objekt (4a, 4d) zumindest teilweise darstellenden Bildaufnahme, wobei ein aufgenommenes Bild über die drahtlose Kommunikationsverbindung (6a, 6b, 6d) an die Vermessungsapplikation (2a, 2d) zu Dokumentationszwecken übertragbar und die Kamera (11b) in dem gemeinsamen Gehäuse (12a, 12b, 12d) angeordnet ist.

34. Verwendung des Hand-Distanzmessgeräts nach einem der Ansprüche 26 bis 33 in dem Verfahren nach einem der Ansprüche 1 bis 21.

## Claims

1. Method for ensuring interaction between a distance meter and a surveying application, having a system with
- a computer unit (1a, 1c, 1d) for executing the surveying application (2a, 2c, 2d),
- a distance-measuring element (3b, 3c) for measuring a distance to an object (4a, 4d) and recording a measured distance value, and
- a remote control element (5b, 5c), which in order to ensure interaction between the distance meter and the surveying application (2a, 2c, 2d), has a wireless communication link (6a, 6b, 6c, 6d) to the computer unit (1a, 1c, 1d),
having the steps
- measuring and recording the measured distance value using the distance-measuring element (3b, 3c), controlled by the distance meter,
- assigning the measured distance value to a variable that can be processed by the surveying application (2a, 2c, 2d) by interaction between the distance meter and the surveying application (2a, 2c, 2d) via the remote control element (5b, 5c), and
- transmitting the measured distance value to the surveying application (2a, 2c, 2d),
**characterized in that**
before execution by the remote control element (5b, 5c), the surveying application (2a, 2c, 2d) is transmitted to the computer unit (1a, 1c, 1d) via the wireless communication link (6a, 6b, 6c, 6d).

2. Method according to Claim 1, wherein the assignment of the measured distance value which is to be recorded takes place first, followed by the measurement and recording of the measured distance value.

3. Method according to Claim 1, wherein the assignment of the measured distance value takes place after the transmission of the measured distance value.

4. Method according to any one of the preceding claims,
**characterized in that**
the measured distance value is assigned by at least one control command being input into the remote control element (5b, 5c) by the distance meter.

5. Method according to Claim 4,
**characterized in that**
the input of the control command assigns the measured distance value to a graphical construction object (7a, 7c, 7d) provided by the surveying application (2a, 2c, 2d).

6. Method according to Claim 5,
**characterized in that**
the assignment defines a variable and/or specifies an alignment of the graphical construction object (7a, 7c, 7d).

7. Method according to Claim 6,
**characterized in that**
the graphical construction object (7a, 7c, 7d) forms a simplified graphical representation of at least a part of the object (4a, 4d) that is measured or to be measured, in the form of the measured distance value.

8. Method according to any one of the preceding claims,
**characterized in that**
before the measurement and recording, assignment and transmission of the measured distance value, the distance meter specifies or selects via the remote control element (5b, 5c) a measurement sequence of measured distance values to be recorded, which is stored in the surveying application (2a, 2c, 2d).

9. Method according to any one of the preceding claims,
**characterized in that**
information items relating to a current status of the surveying application (2a, 2c, 2d) are displayed by optical display means (8a, 8b, 8c), which are at least partially assigned to the remote control element (5b, 5c).

10. Method according to Claim 9,
**characterized in that**
the information items displayed form an instruction to the distance meter as to the form in which the measurement and recording of the measured distance value has to take place.

11. Method according to Claim 10,
**characterized in that**
the instruction depends on an analysis of at least one previously recorded measured distance value that was recently carried out by the surveying application (2a, 2c, 2d).

12. Method according to any one of Claims 9 to 11,
**characterized in that**
the display means (8a, 8b, 8c) are implemented in the form of a display screen, in particular an LCD screen, and the information items are formed by at least one part of an image generated by the surveying application (2a, 2c, 2d).

13. Method according to any one of Claims 9 to 11,
**characterized in that**
the display means (8a, 8b, 8c) are implemented as a touch-sensitive display screen which can also be used as an input means.

14. Method according to any one of the preceding claims,
**characterized in that**
the surveying application (2a, 2c, 2d) enables a visual display of building structures.

15. Method according to any one of the preceding claims,
**characterized in that**
shortly before or after the measurement and recording of the measured distance value, a horizontal alignment measurement, for example an azimuth value, which can be assigned thereto is recorded, in particular by an electronic compass (9b) or a first inertial sensor (17c) mechanically connected to the distance-measuring element (3b, 3c), and transmitted to the surveying application (2a, 2c, 2d).

16. Method according to any one of the preceding claims,
**characterized in that**
shortly before or after the measurement and recording of the measured distance value, a vertical alignment measurement value, for example a tilt measurement value, that can be assigned thereto is recorded, in particular by an inclinometer (10b) mechanically connected to the distance-measuring element (3b, 3c), or by a second inertial sensor or the first inertial sensor (17c), and transmitted to the surveying application (2a, 2c, 2d).

17. Method according to any one of the preceding claims,
**characterized in that**
shortly before or after the measurement and recording of the measured distance value, an image is acquired, documenting the process of measuring the measured distance value and at least partially representing the object (4a,4d), via a camera (11b) in particular via a CCD or CMOS camera, which is mechanically connected to the distance-measuring element (3b, 3c), and the recorded image is transmitted to the surveying application (2a, 2c, 2d) for documentation purposes.

18. Method according to any one of the preceding claims,
**characterized in that**
the wireless communication link (6a, 6b, 6c, 6d) uses the Bluetooth standard or the WLAN standard.

19. Method according to any one of the preceding claims,
**characterized in that**
the wireless communication link (6a, 6b, 6c, 6d) is effected, at least in a subsection, by means of a mobile telephone network, which in particular uses the GSM or UMTS standard.

20. Method according to any one of the preceding claims,
**characterized in that**
the distance-measuring element (3b) and the remote control element (5b) are arranged in a common housing (12a, 12b, 12d) and the transmission of the measured distance value to the surveying application (2a, 2d) takes place via the wireless communication link (6a, 6b, 6d).

21. Method according to Claim 20,
**characterized in that**
within the common housing (12a, 12b, 12d), input means (13a, 13b) and/or optical display means (8a, 8b) are arranged that can be assigned to the remote control element (5b) and the distance-measuring element (3b) alternately or at the same time.

22. Method according to any one of Claims 1 to 19,
**characterized in that**
the distance-measuring element (3c) in a distance-measuring unit (14c) and the remote control element (5c) in a remote control unit (15c) are arranged locally separated from each other.

23. Method according to Claim 22,
**characterized in that**
in successive steps the distance value measured and recorded by the distance-measuring element (3c) is transmitted from the distance-measuring unit (14c) to the remote control element (5c) of the remote control unit (15c) and, via the wireless communication link (6c), from the remote control unit (15c) to the surveying application (2c).

24. Method according to Claim 23,
**characterized in that**
the transmission of the measured distance value from the distance-measuring unit (14c) to the remote control unit (15c) takes place via a second wireless communication link (16c) using the Bluetooth standard.

25. Method according to any one of the preceding claims,
**characterized in that**
the system comprises a plurality of remote control elements (5b, 5c), which have a plurality of wireless communication links (6d', 6d", 6d"') to the computer unit (1a, 1c, 1d), and a plurality of distance-measuring elements (3b, 3c), wherein via the plurality of remote control elements (5b, 5c) a plurality of distance meters interact with each other and/or with the surveying application (2a, 2c, 2d), and, for example, the plurality of remote control elements (5b, 5c) and the plurality of distance-measuring elements (3b, 3c) are each arranged in common housings (12a, 12b, 12d', 12d", 12d''').

26. Hand-held distance-measuring device having a distance-measuring element (3b) for measuring a distance to an object (4a, 4d) and for recording a measured distance value, having
- a remote control element (5b) for remote-controlled operation of a surveying application (2a, 2d) which is executed by an external computer unit (1a, 1d), having communication means (21b) for creating a wireless communication link (6a, 6b, 6d) to the external computer unit (1a, 1d) at least for the transmission of the measured distance value to the surveying application (2a, 2d) and of signals for the remote-controlled operation of the surveying application (2a, 2d), and
- input means (13a, 13b) for the alternating or simultaneous operation of the surveying application (2a, 2d) via the remote control element (5b) and of the distance-measuring element (3b), wherein the distance-measuring element (3b), the remote control element (5b) and the input means (13a, 13b) are arranged in a common housing (12a, 12b, 12d), **characterized in that**
a data memory for storing the surveying application is arranged in the common housing (12a, 12b, 12d), wherein the surveying application is transmitted to the computer unit (1a, 1d) via the wireless communication link (6a, 6b, 6d) prior to being executed there.

27. Hand-held distance-measuring device according to Claim 26,
**characterized by**
optical display means (8a, 8b) for the display of the measured distance value recorded and of information items relating to a current status of the surveying application (2a, 2d), wherein the optical display means (8a, 8b) are arranged in and/or on the common housing (12a, 12b, 12d).

28. Hand-held distance-measuring device according to Claim 27,
**characterized in that**
the display means (8a, 8b) are implemented in the form of a display screen, in particular an LCD screen, the information items being formed by at least one part of an image generated by the surveying application (2a, 2d).

29. Hand-held distance-measuring device according to Claim 27 or 28,
**characterized in that**
the optical display means (8a, 8b) and the input means (13a, 13b) are implemented as a touch-sensitive display.

30. Hand-held distance-measuring device according to any one of Claims 26 to 29,
**characterized by** a tilt sensor (10b) for determining the vertical alignment of the distance-measuring element (3b), wherein a vertical alignment measurement can be transmitted via the wireless communication link (6a, 6b, 6d) to the surveying application (2a, 2d) and the tilt sensor (10b) is arranged in the common housing (12a, 12b, 12d).

31. Hand-held distance-measuring device according to any one of Claims 26 to 30,
**characterized by** an electronic compass (9b) for determining the horizontal alignment of the distance-measuring element (3), wherein a horizontal alignment measurement value can be transmitted via the wireless communication link (6a, 6b, 6d) to the surveying application (2a, 2d) and the electronic compass (9b) is arranged in the common housing (12a, 12b, 12d).

32. Hand-held distance-measuring device according to any one of Claims 26 to 29,
**characterized by** at least one inertial sensor (17c) for determining the alignment of the distance-measuring element, wherein an inertial sensor measurement value - in particular a horizontal alignment measurement value and/or a vertical alignment measurement value - can be transmitted via the wireless communication link (6a, 6b, 6d) to the surveying application (2a, 2d) and the at least one inertial sensor (17c) is arranged in the common housing (12a, 12b, 12d).

33. Hand-held distance-measuring device according to any one of Claims 26 to 32,
**characterized by** a camera (11b), in particular a CCD or CMOS camera, for acquisition of an image documenting the process of measuring the measured distance value and at least partially displaying the object (4a, 4d), wherein a recorded image can be transmitted via the wireless communication link (6a, 6b, 6d) to the surveying application (2a, 2d) for documentation purposes and the camera (11b) is arranged in the common housing (12a, 12b, 12d).

34. Use of the hand-held distance-measuring device according to any one of Claims 26 to 33 in the method according to any one of Claims 1 to 21.

## Revendications

1. Procédé d'interaction entre un appareil de mesure de distance et une application de mesure, avec un système comprenant :
- une unité calculatrice (1a, 1c, 1d), pour exécuter l'application de mesure (2a, 2c, 2d),
- un élément de mesure de distance (3b, 3c) pour mesurer une distance vis-à-vis d'un objet (4a, 4d) et enregistrer une valeur de mesure de distance, et
- un élément de télécommande (5b, 5c), disposé pour l'interaction entre l'appareil de mesure de distance et l'application de mesure (2a, 2c, 2d) en une liaison de communication sans fil (6a, 6b, 6c, 6d) avec l'unité calculatrice (1a, 1c, 1d), comprenant les étapes
- de mesure et enregistrement de la valeur de mesure de distance au moyen de l'élément de mesure de distance (3b, 3c), commandé par l'appareil de mesure de distance,
- d'association de la valeur de mesure de distance à une grandeur susceptible d'être traitée par l'application de mesure (2a, 2c, 2d), par interaction entre l'appareil de mesure de distance et l'application de mesure (2a, 2c, 2d), par l'intermédiaire de l'élément de télécommande (5b, 5c), et
- de transmission de la valeur de mesure de distance à l'application de mesure (2a, 2c, 2d),
**caractérisé en ce que** l'application de mesure (2a, 2c, 2d) est transmise, avant l'exécution, par l'élément de télécommande (5b, 5c) à l'unité calculatrice (1a, 1c, 1d), par l'intermédiaire de la liaison de communication sans fil (6a, 6b, 6c, 6d).

2. Procédé selon la revendication 1, dans lequel sont effectuées, d'abord, l'association de la valeur de mesure de distance, qui doit être enregistrée et, ensuite, la mesure et l'enregistrement de la valeur de mesure de distance.

3. Procédé selon la revendication 1, dans lequel l'association de la valeur de mesure de distance est effectuée après la transmission de la valeur de mesure de distance.

4. Procédé selon l'une des revendications précédentes, **caractérisé en ce que** l'association de la valeur de mesure de distance est effectuée par au moins un ordre de commande introduit par l'appareil de mesure de distance dans l'élément de télécommande (5b, 5c).

5. Procédé selon la revendication 4, **caractérisé en ce que**, du fait de l'introduction de l'ordre de commande, la valeur de mesure de distance est associée à un objet de construction (7a, 7c, 7d) graphique, mis à disposition par l'application de mesure (2a, 2c, 2d).

6. Procédé selon la revendication 5, **caractérisé en ce que**, du fait de l'association, une définition d'une grandeur et/ou une détermination d'une orientation de l'objet de construction (7a, 7c, 7d) graphique est effectuée.

7. Procédé selon la revendication 6, **caractérisé en ce que** l'objet de construction (7a, 7c, 7d) graphique forme une représentation graphique simplifiée au moins d'une partie de l'objet (4a, 4d), mesuré ou à mesurer sous la forme de la valeur de mesure de distance.

8. Procédé selon l'une des revendications précédentes, **caractérisé en ce que**, avant la mesure et l'enregistrement, l'association et la transmission de la valeur de mesure de distance par l'intermédiaire de l'élément de télécommande (5b, 5c), l'appareil de mesure de distance fixe ou sélectionne une succession de mesures, stockées en mémoire dans l'application de mesure (2a, 2c, 2d), de valeurs de mesure de distance à enregistrer.

9. Procédé selon l'une des revendications précédentes, **caractérisé en ce que** des informations, qui concernent un état actuel de l'application de mesure (2a, 2c, 2d), sont affichées par des moyens d'affichage (8a, 8b, 8c) optiques associés au moins partiellement à l'élément de télécommande (5b, 5c).

10. Procédé selon la revendication 9, **caractérisé en ce que** les informations affichées forment une instruction, destinée à l'appareil de mesure de distance, dictant sous quelle forme la mesure et l'enregistrement de la valeur de mesure de distance doivent s'effectuer.

11. Procédé selon la revendication 10, **caractérisé en ce que** l'instruction dépend d'une analyse, effectuée actuellement par l'application de mesure (2a, 2c, 2d), d'au moins une valeur de mesure de distance enregistrée précédemment.

12. Procédé selon l'une des revendications 9 à 11, **caractérisé en ce que** les moyens d'affichage (8a, 8b, 8c) sont réalisés sous la forme d'un affichage par image, en particulier un écran LCD, et les informations sont formées par au moins une partie d'une image produite par l'application de mesure (2a, 2c, 2d).

13. Procédé selon l'une des revendications 9 à 11, **caractérisé en ce que** les moyens d'affichage (8a, 8b, 8c) sont réalisés sous la forme d'un affichage par image sensible au contact, utilisable également comme moyens d'introduction.

14. Procédé selon l'une des revendications précédentes, **caractérisé en ce que** l'application de mesure (2a, 2c, 2d) permet une représentation visuelle d'ouvrages de construction.

15. Procédé selon l'une des revendications précédentes, **caractérisé en ce que**, actuellement à la mesure et à l'enregistrement de la valeur de mesure de distance, une valeur de mesure d'orientation horizontale, susceptible de lui être associée, par exemple une valeur d'azimut, est enregistrée, en particulier au moyen d'un compas électronique (9b) ou d'un premier capteur inertiel (17c), relié mécaniquement à l'élément de mesure de distance (3b, 3c), et transmise à l'application de mesure (2a, 2c, 2d).

16. Procédé selon l'une des revendications précédentes, **caractérisé en ce que**, actuellement à la mesure et à l'enregistrement de la valeur de mesure de distance, une valeur de mesure d'orientation verticale, susceptible de lui être associée, par exemple une valeur de mesure d'inclinaison, est enregistrée, en particulier au moyen d'un capteur d'inclinaison (10b), d'un deuxième capteur inertiel ou du premier capteur inertiel (17c), relié mécaniquement à l'élément de mesure de distance (3b, 3c), et transmise à l'application de mesure (2a, 2c, 2d).

17. Procédé selon l'une des revendications précédentes, **caractérisé en ce que**, actuellement à la mesure et à l'enregistrement de la valeur de mesure de distance, un enregistrement d'image, documentant le processus de mesure de la valeur de mesure de distance et représentant au moins partiellement l'objet (4a, 4d), est effectué par l'intermédiaire d'une caméra (11b), en particulier une caméra CCD ou CMOS, reliée mécaniquement à l'élément de mesure de distance (3b, 3c), et l'image enregistrée est transmise à l'application de mesure (2a, 2c, 2d) à des fins de documentation.

18. Procédé selon l'une des revendications précédentes, **caractérisé en ce que** la liaison de communication sans fil (6a, 6b, 6c, 6d) utilise le standard Bluetooth ou le standard WLAN.

19. Procédé selon l'une des revendications précédentes, **caractérisé en ce que**, au moins dans un tronçon partiel, la liaison de communication sans fil (6a, 6b, 6c, 6d) s'effectue par l'intermédiaire d'un réseau de téléphonie mobile, qui utilise en particulier le standard GSM ou UMTS.

20. Procédé selon l'une des revendications précédentes, **caractérisé en ce que** l'élément de mesure de distance (3b) et l'élément de télécommande (5b) sont disposés dans un boîtier (12a, 12b, 12d) commun et la transmission de la valeur de mesure de distance à l'application de mesure (2a, 2d) s'effectue par la liaison de communication sans fil (6a, 6b, 6c, 6d).

21. Procédé selon la revendication 20, **caractérisé en ce que** des moyens d'introduction (13a, 13b) et/ou des moyens d'affichage (8a, 8b) optiques, susceptibles d'être associés, en alternance ou simultanément, à l'élément de télécommande (5b), sont disposés à l'intérieur du boîtier (12a, 12b, 12d) commun.

22. Procédé selon l'une des revendications 1 à 19, **caractérisé en ce que** l'élément de mesure de distance (3c) est disposé dans une unité de mesure de distance (14c) et l'élément de télécommande (5c) est disposé dans une unité de télécommande (15c), en étant localement séparés l'un de l'autre.

23. Procédé selon la revendication 22, **caractérisé en ce que**, en des étapes se suivant les unes les autres, la valeur de mesure de distance, mesurée par l'élément de mesure de distance (3c) et enregistrée, est transmise, par l'unité de mesure de distance (14c), à l'élément de télécommande (5c) de l'unité de télécommande (15c) et, par l'intermédiaire de la liaison de communication sans fil (6c), de l'unité de télécommande (15c) à l'application de mesure (2c).

24. Procédé selon la revendication 23, **caractérisé en ce que** la transmission de la valeur de mesure de distance, de l'unité de mesure de distance (14c) à l'unité de télécommande (15c), s'effectue par l'intermédiaire d'une deuxième liaison de communication sans fil (16c) opérant au standard Bluetooth.

25. Procédé selon l'une des revendications précédentes, **caractérisé en ce que** le système présente plusieurs éléments de télécommande (5b, 5c), disposés en plusieurs liaisons de communication sans fil (6d', 6d", 6d"') avec l'unité calculatrice (1a, 1c, 1d), et plusieurs éléments de mesure de distance (3b, 3c), sachant que, par l'intermédiaire de la pluralité d'éléments de télécommande (5b, 5c), une interaction de plusieurs appareils de mesure de distance entre eux et/ou vis-à-vis de l'application de mesure (2a, 2c, 2d) est effectuée et, par exemple, la pluralité d'éléments de télécommande (5b, 5c) et la pluralité d'éléments de mesure de distance (3b, 3c) sont disposés chaque fois dans des boîtiers (12a, 12b, 12d', 12d", 12d"') communs.

26. Appareil portatif pour la mesure de distance, avec un élément de mesure de distance (3b) pour mesurer une distance vis-à-vis d'un objet (4a, 4d) et pour enregistrer une valeur de mesure de distance, avec :
- un élément de télécommande (5b), pour l'opération, de manière télécommandée, d'une application de mesure (2a, 2d), réalisée par une unité calculatrice (1a, 1d) externe, avec des moyens de communisation (21 b) pour la création d'une liaison de communication sans fil (6a, 6b, 6d) à l'unité calculatrice externe (1a, 1d), au moins pour la transmission de la valeur de mesure de distance à l'application de mesure (2a, 2d) et de signaux pour l'opération, de manière télécommandée, de l'application de mesure (2a, 2d), et
- des moyens d'introduction (13a, 13b), pour l'opération, en alternance ou simultanée, de l'application de mesure (2a, 2d), par l'intermédiaire de l'élément de télécommande (5b) et de l'élément de mesure de distance (3b),
l'élément de mesure de distance (3b), l'élément de télécommande (5b) et les moyens d'introduction (13a, 13b) étant disposés dans un boîtier (12a, 12b, 12d) commun,
**caractérisé en ce qu'**
une mémoire à données, pour le stockage en mémoire par l'application de mesure, est disposée dans le boîtier (12a, 12b, 12d) commun, l'application de mesure étant transmise à l'unité calculatrice (1a, 1d), avant l'exécution locale, par l'intermédiaire de la liaison de communication sans fil (6a, 6b, 6d).

27. Appareil portatif pour la mesure de distance selon la revendication 26, **caractérisé par** des moyens d'affichage (8a, 8b) optiques, pour l'affichage de la valeur de mesure de distance enregistrée et d'informations qui concernent un état actuel de l'application de mesure (2a, 2d), les moyens d'affichage (8a, 8b) optiques étant disposés dans et/ou sur le boîtier (12a, 12b, 12d) commun.

28. Appareil portatif pour la mesure de distance selon la revendication 27, **caractérisé en ce que** les moyens d'affichage (8a, 8b) optiques sont réalisés sous la forme d'un affichage par image, en particulier un écran LCD, les informations étant formées par au moins une partie d'une image produite par l'application de mesure (2a, 2d).

29. Appareil portatif pour la mesure de distance selon la revendication 27 ou 28, **caractérisé en ce que** les moyens d'affichage (8a, 8b) optiques et les moyens d'introduction (13a, 13b) sont réalisés sous la forme d'un affichage par image sensible au contact.

30. Appareil portatif pour la mesure de distance selon l'une des revendications 26 à 29, **caractérisé par** un capteur d'inclinaison (10b) pour la détermination de l'orientation verticale de l'élément de mesure de distance (3b), une valeur d'orientation verticale étant susceptible d'être transmise à l'application de mesure (2a, 2d), par l'intermédiaire de la liaison de communication sans fil (6a, 6b, 6d), et le capteur d'inclinaison (10b) est disposé dans le boîtier (12a, 12b, 12d) commun.

31. Appareil portatif pour la mesure de distance selon l'une des revendications 26 à 30, **caractérisé par** un compas électronique (9b), pour la détermination de l'orientation horizontale de l'élément de mesure de distance (3), une valeur de mesure d'orientation horizontale étant susceptible d'être transmise à l'application de mesure (2a, 2d), par l'intermédiaire de la liaison de communication sans fil (6a, 6b, 6d), et le compas électronique (9b) est disposé dans le boîtier (12a, 12b, 12d) commun.

32. Appareil portatif pour la mesure de distance selon l'une des revendications 26 à 29, **caractérisé par** au moins un capteur inertiel (17c) pour la détermination de l'orientation de l'élément de mesure de distance, une valeur de mesure de capteur inertiel - en particulier une valeur de mesure d'orientation horizontale et/ou une valeur de mesure d'orientation verticale - étant susceptible d'être transmise à l'application de mesure (2a, 2d), par l'intermédiaire de la liaison de communication sans fil (6a, 6b, 6d), et le au moins un capteur inertiel (17c) est disposé dans le boîtier (12a, 12b, 12d) commun.

33. Appareil portatif pour la mesure de distance selon l'une des revendications 26 à 32, **caractérisé par** une caméra (11b), en particulier une caméra CCD ou CMOS, pour enregistrement d'images documentant le processus de mesure de la valeur de mesure de distance et représentant au moins partiellement l'objet (4a, 4d), une image enregistrée étant susceptible d'être transmise, à des fins de documentation, à l'application de mesure (2a, 2d), par l'intermédiaire de la liaison de communication sans fil (6a, 6b, 6d), et la caméra (11b) étant disposée dans le boîtier (12a, 12b, 12d) commun.

34. Utilisation de l'appareil portatif pour la mesure de distance selon l'une des revendications 26 à 33, dans le procédé selon l'une des revendications 1 à 21.
